# EUROPÄISCHE PATENTSCHRIFT

(11) **EP 2 603 384 B1**
(45) Veröffentlichungstag und Bekanntmachung des Hinweises auf die Patenterteilung: **31.08.2016**
(21) Anmeldenummer: 11743829.1
(22) Anmeldetag: 12.08.2011
(51) Int. Cl.: B41J 3/407, B41J 11/00, B41J 11/46, G06K 19/06, G06K 5/04, G06K 7/00, G06K 7/10, B41J 3/00, G06K 7/14

(54) **BEDRUCKUNGSOBJEKT UND DRUCKER ZUM BEDRUCKEN EINES BEDRUCKUNGSOBJEKTES**
OBJECT TO BE PRINTED AND PRINTER TO PRINT AN OBJECT
OBJET Ä IMPRIMER ET IMPRIMANTE DESTINÉ À L'IMPRESSION D'UN OBJE T

(30) Priorität: 15.09.2010 DE 102010037564; 12.08.2010 DE 102010036968
(43) Veröffentlichungstag der Anmeldung: 19.06.2013
(73) Patentinhaber: Phoenix Contact GmbH & Co. KG, 32825 Blomberg (DE)
(72) Erfinder: SCHIERHOLZ, Albrecht, 32816 Schieder-Schwalenberg (DE)
(74) Vertreter: Michalski Hüttermann & Partner Patentanwälte mbB
(86) Internationale Anmeldenummer: PCT/EP2011/063922
(87) Internationale Veröffentlichungsnummer: WO 2012/020117

(56) Entgegenhaltungen:
- DE-A1-102006 003 056
- JP-A- 8 234 414
- US-A- 5 051 779
- US-A1- 2003 072 019
- US-A1- 2005 121 528

## Beschreibung

Die Erfindung betrifft ein Bedruckungsobjekt, zum Bedrucken mittels eines Druckers, vorzugsweise mittels eines Thermotransfer-Druckers, mit einem bedruckbaren Druckbereich und einem Kennzeichnungsbereich, wobei in dem Kennzeichnungsbereich eine Kennzeichnung vorgesehen ist (sehe US 2003/0072019).

Bedruckungsobjekte der eingangs genannten Art sind aus der Praxis gut bekannt und werden typischerweise zur Kennzeichnung von Gehäuse- bzw. Anschlusskennzeichnungen verwendet, zum Beispiel in Form von Etiketten, Kennzeichnungskarten, Einsteckschildern, Schilderplatten oder Bezeichnungsschildern. Häufig sind diese Bedruckungsobjekte aus einem Kunststoff gefertigt und soweit fertiggestellt, dass sie vom Verwender nur noch in einem dafür vorgesehenen Drucker bedruckt werden müssen.

Zum Bedrucken derartiger Bedruckungsobjekte haben sich Thermotransfer-Drucker als besonders geeignet herausgestellt. Problematisch beim Thermotransfer-Druck ist jedoch, dass die Druckparameter, wie Drucktemperatur, Druckgeschwindigkeit, Material des Bedruckungsobjekts und Dicke des Bedruckungsobjekts, genau zueinander passen müssen, um ein optimales Druckbild zu gewährleisten. Der Stand der Technik bietet bisher keine Möglichkeiten, auf einfache und kostengünstige Weise sicherzustellen, dass ein Bedrucken eines Bedruckungsobjekts nur dann erfolgt, wenn alle Parameter für den Druck korrekt sind.

Es ist daher die Aufgabe der Erfindung, ein derartiges Bedruckungsobjekt sowie einen derartigen Drucker zum Bedrucken eines Bedruckungsobjekts bereitzustellen, mit denen auf einfache und sichere Weise gewährleistbar ist, dass ein optimaler Druck erfolgt.

Diese Aufgabe wird durch die Gegenstände der unabhängigen Patentansprüche gelöst. Bevorzugte Weiterbildungen sind in den Unteransprüchen beschrieben.

Eine Lösung der zuvor genannten Aufgabe besteht somit in einem Bedruckungsobjekt, gemäss Anspruch 1.

Die Strichcode-Kennzeichnung weist mehrere hintereinander angeordnete Einzelstriche auf, wobei die Einzelstriche eine vorbestimmte Längserstreckung und Breite aufweisen. Insofern sind die Einzelstriche typischerweise als Rechtecke ausgestaltet, die hintereinander angeordnet sind. Typischerweise sind zwei Arten von Einzelstrichen vorgesehen, nämlich einerseits helle und andererseits dunkle Einzelstriche, zur Bereitstellung eines maximalen Kontrastes vorzugsweise weiße bzw. schwarze Einzelstriche.

Wie zuvor schon ausgeführt, kann eine derartige Strichcode-Kennzeichnung auf sehr einfache Weise auf das Bedruckungsobjekt aufgebracht sein. Gemäß einer bevorzugten Weiterbildung der Erfindung ist in diesem Zusammenhang vorgesehen, dass die Strichcode-Kennzeichnung auf das Bedruckungsobjekt aufgedruckt ist.

Neben der einfachen Aufbringbarkeit einer Strichcode-Kennzeichnung auf ein Bedruckungsobjekt gilt ferner, dass eine derartige Strichcode-Kennzeichnung auch mit sehr einfachen Mitteln erfassbar ist, nämlich z.B. mittels eines Reflexsensors. Im Gegensatz zu anderen aus dem Stand der Technik bekannten Lösungen, bei denen entweder mechanische Strukturen abgetastet werden müssen oder Informationen von einem RFID-Chip erhalten werden, ist die Detektierung einer Strichcode-Kennzeichnung mittels eines Reflexsensors wesentlich vereinfacht.

Grundsätzlich ist es nicht erforderlich, dass das Bedruckungsobjekt neben der Strichcode-Kennzeichnung mit weiteren Einrichtungen versehen ist. Gemäß einer bevorzugten Weiterbildung der Erfindung ist jedoch ein Lochmuster zur Positionierung und/oder Fixierung des Bedruckungsobjekts in einem Drucker vorgesehen. Dabei kann es ausreichend sein, dass das Lochmuster eine einzige Lochung aufweist. Auf diese Weise ist es z.B. möglich, das Bedruckungsobjekt längs eines Randes an einer entsprechenden Kante des Druckers anzulegen und über die einzige Lochung genau zu positionieren und zu fixieren. Gemäß einer bevorzugten Weiterbildung der Erfindung sind jedoch wenigstens zwei Lochungen vorgesehen, wobei diese Lochungen vorzugsweise voneinander verschieden sind. Ganz besonders bevorzugt sind die beiden Lochungen in einer derartigen Weise voneinander verschieden, dass die einer jeweiligen Lochung korrespondierende Einrichtung an dem Drucker nur bei einer einzigen vorbestimmten Ausrichtung des Bedruckungsobjekts in die jeweilige Lochung hineinpassen. Dies kann z.B. dadurch realisiert sein, dass die beiden Lochungen aus zwei gleich großen Ovalen bestehen, wobei die Ausrichtungen der Ovale jedoch voneinander verschieden sind, z.B. ein Oval hinsichtlich seiner Längsrichtung gegenüber dem anderen Oval um 90° gedreht ist.

Grundsätzlich kann das Lochmuster in einem beliebigen Bereich des Bedruckungsobjekts vorgesehen sein. Gemäß einer bevorzugten Weiterbildung der Erfindung ist jedoch vorgesehen, dass das Lochmuster im Kennzeichnungsbereich angeordnet ist. Dies hat zum einen den Vorteil, dass damit der gesamte Druckbereich zum Bedrucken zur Verfügung steht, und andererseits, dass bei Vorsehen einer Abtrennbarkeit des Kennzeichnungsbereichs von dem Bedruckungsobjekt das fertiggestellte Bedruckungsobjekt nach dem Bedrucken keine störenden Lochungen mehr aufweist.

Für die Längserstreckung 1 der Einzelstriche in Längsrichtung der Einzelstriche, also in Richtung der hintereinander angeordneten Einzelstriche, gilt gemäß einer bevorzugten Weiterbildung der Erfindung: l ≥ 1,5 mm, vorzugsweise l ≥ 1,8 mm, ganz besonders bevorzugt l ≥ 2,0 mm. Ferner gilt für die Längserstreckung l der Einzelstriche in Längsrichtung der Einzelstriche gemäß einer bevorzugten Weiterbildung der Erfindung: l ≤ 4 mm, vorzugsweise 1 ≤ 4 mm, ganz besonders bevorzugt l ≤ 2,5 mm.

Ferner gilt für die Breite b der Einzelstriche in Querrichtung der hintereinander angeordneten Einzelstriche gemäß einer bevorzugten Weiterbildung der Erfindung: 2 mm ≤ b ≤ 10 mm, vorzugsweise 2 mm ≤ b ≤ 8 mm, ganz besonders bevorzugt 2 mm ≤ b ≤ 6 mm. Es hat sich herausgestellt, dass bei derartiger Dimensionierung der Einzelstrich eine optimale Erfassung der Strichcode-Kennzeichnung bei nur geringem Platzbedarf für dieselbe möglich ist.

Grundsätzlich kann das Bedruckungsobjekt aus verschiedenen Materialien bestehen, wie Papier oder Pappe. Gemäß einer bevorzugten Weiterbildung der Erfindung ist jedoch vorgesehen, dass das Bedruckungsobjekt aus einem flachen Material aus Kunststoff besteht. Bevorzugte Beschriftungsmaterialien sind PVC und PET. Ganz besonders bevorzugt sind PVC-Karten mit einer Dicke zwischen 0,3 mm und 0,5 mm, PET-Karten mit einer Dicke von ca. 0,17 mm und PET-Folien mit einer Dicke von ca. 0,2 mm vorgesehen.

Gemäß der Erfindung ist vorgesehen, dass in dem Kennzeichnungsbereich zwei Strichcode-Kennzeichnungen angeordnet sind. Es hat sich nämlich herausgestellt, dass beim Vorsehen von nur einer einzigen Strichcode-Kennzeichnung ein Bedrucken des Bedruckungsobjekts unter Umständen dann schon nicht mehr möglich ist, wenn die Strichcode-Kennzeichnung vor dem Bedrucken von dem entsprechenden Drucker nicht korrekt erfasst werden kann. Dies stellt z.B. dann ein Problem dar, wenn die Strichcode-Kennzeichnung verschmutzt oder verknickt ist.

Vorzugsweise ist in diesem Zusammenhang vorgesehen, dass die beiden Strichcode-Kennzeichnungen identisch sind. Dem oben genannten Problem wird insofern dadurch abgeholfen, dass die Strichcode-Kennzeichnung in dem Kennzeichnungsbereich praktisch "wiederholt" wird. Das heißt, dass die Strichcode-Kennzeichnung innerhalb des Kennzeichnungsbereichs an einem anderen Ort noch einmal vorgesehen wird. Ist also eine der Strichcode-Kennzeichnungen nicht lesbar, so steht immer noch die andere Strichcode-Kennzeichnung zur Verfügung, um das Bedruckungsobjekt eindeutig zu identifizieren und die Zusammenstellung der korrekten Druckparameter zu gewährleisten.

Alternativ zum Vorsehen identischer Strichcode-Kennzeichnungen ist gemäß einer bevorzugten Weiterbildung der Erfindung vorgesehen, dass die beiden Strichcode-Kennzeichnungen wenigstens teilweise, vorzugsweise vollständig, zueinander invertiert sind. Eine andere bevorzugten Weiterbildung der Erfindung besteht darin, dass die Strichcode-Kennzeichnungen um 180° verdreht zueinander angeordnet sind.

Grundsätzlich kann das Bedruckungsobjekt verschiedenen Formen folgen, gemäß einer bevorzugten Weiterbildung ist jedoch vorgesehen, dass das Bedruckungsobjekt eine rechteckige Form aufweist. Dabei ist gemäß einer bevorzugten Weiterbildung der Erfindung ferner vorgesehen, dass der Kennzeichnungsbereich ausschließlich in einem Randbereich längs einer einzigen Seite des Bedruckungsobjektes vorgesehen ist und beide Strichcode-Kennzeichnungen in diesem Kennzeichnungsbereich vorgesehen sind. Auf diese Weise muss der Druck vor dem Bedrucken zum Erfassen der Strichcode-Kennzeichnungen nicht lange "suchen". Vielmehr sind die Strichcode-Kennzeichnungen beide auf diese Weise in einem vorbestimmten Bereich vorgesehen, der z.B. am Anfang oder am Ende des durch den Drucker zu bewegenden Bedruckungsobjekts vorgesehen sein kann.

Auch was die Ausrichtung der beiden Strichcode-Kennzeichnungen zueinander angeht, sind viele Möglichkeiten denkbar. Gemäß einer bevorzugten Weiterbildung ist jedoch vorgesehen, dass die beiden Strichcode-Kennzeichnungen parallel zueinander verlaufen. Dies bedeutet, dass die Abfolge der Einzelstriche bei beiden Strichcode-Kennzeichnungen in dieselbe Richtung weisen. Dabei ist es grundsätzlich nicht zwingend erforderlich, dass die Strichcode-Kennzeichnungen beide auf dem Bedruckungsobjekt auf gleicher Höhe vorgesehen sind. Gemäß einer bevorzugten Weiterbildung der Erfindung ist jedoch vorgesehen, dass die einander entsprechenden Einzelstriche der beiden Strichcode-Kennzeichnungen einander genau gegenüberliegen.

Dies bedeutet praktisch, dass die beiden Strichcode-Kennzeichnungen, deren Abfolge von Einzelstrichen ja ohnehin identisch ist, auf derselben Höhe bzw. Länge des Bedruckungsobjekts beginnen und von dort an derart parallel laufen, so dass ein Wechsel von einem Einzelstrich zum nächsten Einzelstrich jeweils auf derselben Höhe bzw. Länge des Bedruckungsobjekts erfolgt. Dies hat z.B. den Vorteil, dass beide Strichcode-Kennzeichnungen, z.B. beim Bewegen des Bedruckungsobjekts durch den Drucker, gleichzeitig erfasst werden können, so dass die zweite Strichcode-Kennzeichnung nicht erst dann erfasst wird, wenn die erste Strichcode-Kennzeichnung, z.B. aufgrund einer Verschmutzung, nicht eindeutig erfassbar gewesen ist.

Dabei können die beiden parallel zueinander verlaufenden und einander genau gegenüberliegenden Strichcode-Kennzeichnungen so im Abstand auf dem Bedruckungsobjekt angeordnet sein, dass sie mit einem einzigen Reflexsensor erfassbar sind. Es hat sich jedoch als vorteilhaft herausgestellt, dass die beiden Strichcode-Kennzeichnungen weiter auseinanderliegen, so dass sie getrennt voneinander von voneinander verschiedenen Reflexsensoren erfassbar sind. Gemäß der Erfindung ist in diesem Zusammenhang vorgesehen, dass für den Zwischenraum z zwischen den beiden Strichcode-Kennzeichnungen gilt: 10 mm ≤ z ≤ 65 mm, vorzugsweise 15 mm ≤ z ≤ 50 mm, ganz besonders bevorzugt 20 mm ≤ z ≤ 30 mm.

Die weiter oben angegebene Aufgabe ist ferner gelöst durch einen Drucker, zum Bedrucken eines Bedruckungsobjekts wie zuvor beschrieben, dadurch gekennzeichnet, dass zur Erfassung einer Strichcode-Kennzeichnung ein Reflexsensor vorgesehen ist.

Wie weiter oben schon ausgeführt, stellt ein Reflexsensor zur Erfassung einer Kennzeichnung eines Bedruckungsobjekts eine sehr kostengünstige und darüber hinaus verlässliche Lösung dar, die wesentlich weniger Aufwand bedeutet, als das aus dem Stand der Technik bekannte Vorsehen eines RFID-Sensors.

Grundsätzlich kann es ausreichend sein, einen einzigen Reflexsensor vorzusehen. Gemäß einer bevorzugten Weiterbildung der Erfindung ist jedoch vorgesehen, dass zwei voneinander separate Reflexsensoren vorgesehen sind, mit denen jeweils eine von zwei im Abstand voneinander angeordnete Strichcode-Kennzeichnungen, vorzugsweise gleichzeitig, erfassbar sind. Dies hat die weiter oben schon beschriebenen Vorteile hinsichtlich der, vorzugsweise gleichzeitigen, Erfassung von zwei nebeneinander angeordneten Strichcode-Kennzeichnungen.

Grundsätzlich kann der Reflexsensor bzw. können die Reflexsensoren innerhalb des Druckers bewegbar, z.B. verschiebbar oder verschwenkbar, angeordnet sein. Auf diese Weise ist ein Bewegen des Bedruckungsobjekts innerhalb des Druckers nicht erforderlich. Gemäß einer bevorzugten Weiterbildung der Erfindung ist jedoch vorgesehen, dass der Drucker einen Transportschlitten aufweist, mit dem das Bedruckungsobjekt in Längsrichtung der Strichcode-Kennzeichnung innerhalb des Druckers bewegbar ist. Auf diese Weise können statische Reflexsensoren vorgesehen werden, was wesentlich kostengünstiger ist und deren Betrieb im Übrigen auch verlässlicher ist.

Nachfolgend wird die Erfindung unter Bezugnahme auf die Zeichnung anhand bevorzugter Ausführungsbeispiele näher erläutert.

In der Zeichnung zeigen:
- Fig. 1: ein Bedruckungsobjekt gemäß einem bevorzugten Ausführungsbeispiel der Erfindung,
- Fig. 2: einen Drucker gemäß einem bevorzugten Ausführungsbeispiel der Erfindung zum Bedrucken derartiger Bedruckungsobjekte und
- Fig. 3: abschnittsweise ein Bedruckungsobjekt gemäß einem anderen bevorzugten Ausführungsbeispiel der Erfindung.

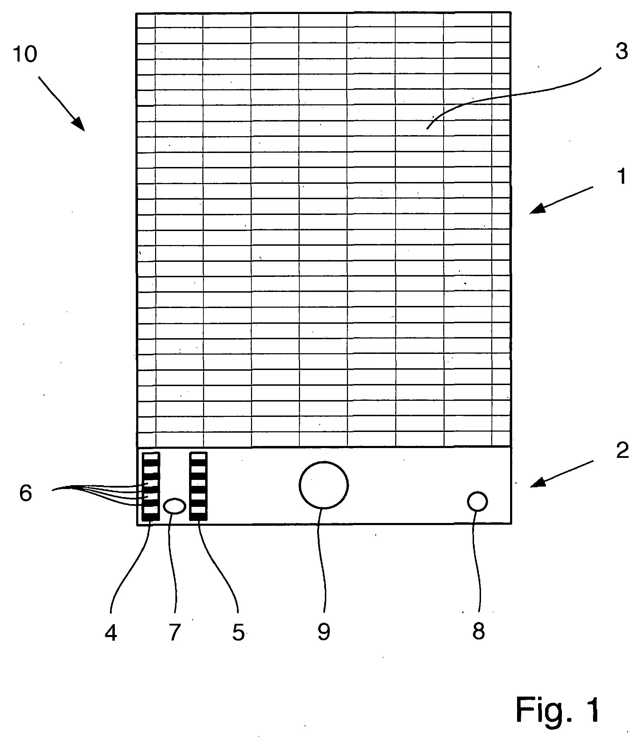

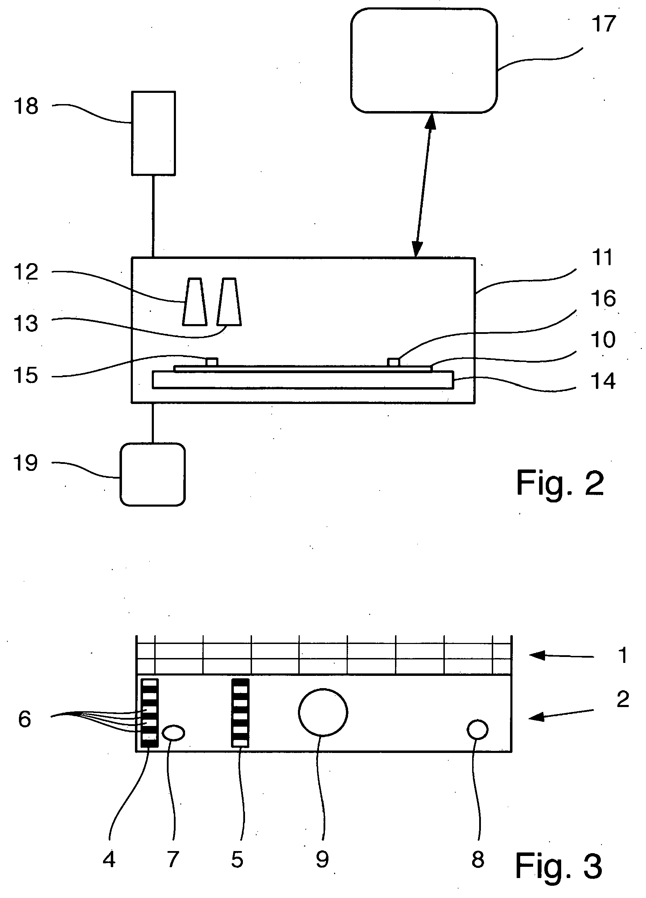

Aus Fig. 1 ist ein Bedruckungsobjekt 10 gemäß einem bevorzugten Ausführungsbeispiel der Erfindung ersichtlich. Das Bedruckungsobjekt 10 ist zum Bedrucken mittels eines Druckers 11 vorgesehen, wie er gemäß einem bevorzugten Ausführungsbeispiel der Erfindung aus Fig. 2 ersichtlich ist.

Das Bedruckungsobjekt 10 weist einen bedruckbaren Druckbereich 1 und einen Kennzeichnungsbereich 2 auf. Der bedruckbare Druckbereich 1 ist vorliegend als eine Art Tabelle 3 vorbereitet, in die mittels des Druckers 11 Informationen, wie Zahlen- und/oder Buchstabenfolgen, gedruckt werden können. Andere Ausgestaltungen des Druckbereichs 1 sind möglich.

Unterhalb des Druckbereichs 1 ist der Kennzeichnungsbereich 2 vorgesehen. Der Kennzeichnungsbereich 2 weist als Kennzeichnung zwei Strichcode-Kennzeichnungen 4, 5 auf. Dabei ist die Strichcode-Kennzeichnung 4 identisch zur Strichcode-Kennzeichnung 5, d.h. die beiden Strichcode-Kennzeichnungen 4, 5 weisen die gleiche Abfolge von hintereinander angeordneten Einzelstrichen 6 auf.

Abgesehen davon, dass die beiden Strichcode-Kennzeichnungen 4, 5 identisch sind, also bei der Erfassung dieselbe Information über die spezifische Art des Bedruckungsobjekts 10 liefern, gilt weiterhin, dass die beiden Strichcode-Kennzeichnungen 4, 5 parallel zueinander ausgerichtet sind, und zwar auf gleicher Höhe innerhalb des Kennzeichnungsbereichs 2. Das bedeutet, dass die einander entsprechenden Einzelstriche 6 der Strichcode-Kennzeichnungen 4, 5 einander genau gegenüberliegen.

Außer den Strichcode-Kennzeichnungen 4, 5 sind im Kennzeichnungsbereich 2 des Bedruckungsobjekts ein Lochmuster, bestehend aus zwei Positionieröffnungen 7, 8, und eine Greiföffnung 9 vorgesehen.

Die Fig. 2 zeigt den Drucker gemäß dem bevorzugten Ausführungsbeispiel der Erfindung schematisch im Schnitt. Dieser Drucker 11 weist zwei Reflexsensoren 12, 13 auf, mit denen jeweils eine der beiden Strichcode-Kennzeichnungen 4, 5 erfassbar ist. Zur Aufnahme des Bedruckungsobjekts 10 weist der Drucker 11 einen Transportschlitten 14 auf. Um das Bedruckungsobjekt 10 sicher und eindeutig auf dem Transportschlitten 14 positionieren und fixieren zu können, sind auf dem Transportschlitten 14 zwei Positionierstifte 15, 16 angeordnet. Die Positionen der Positionierstifte 15, 16 entsprechen den Positionen der Positionieröffnungen 7, 8. Auf diese Weise wird eine Verdrehsicherung realisiert.

Der Transportschlitten 14 ist innerhalb des Druckers 11 beweglich angeordnet, und zwar derart, dass das Bedruckungsobjekt 10 in Längsrichtung der Strichcode-Kennzeichnungen 4, 5 bewegt werden kann. Diese Bewegung entspricht einer Bewegung des Transportschlittens 14 mit dem Bedruckungsobjekt 10 in die Zeichnungsebene der Fig. 2 hinein bzw. aus dieser heraus.

Bei einer derartigen Bewegung des auf dem Transportschlitten 14 vorgesehenen Bedruckungsobjekts 10 werden die beiden Strichcode-Kennzeichnungen 4, 5 unterhalb der beiden Reflex-Sensoren 12, 13 hindurchgeführt. Auf diese Weise kann der Reflex-Sensor 12 die Abfolge der Einzelstriche 6 der Strichcode-Kennzeichnung 4 erfassen. Entsprechendes gilt für den Reflex-Sensor 13 und die Einzelstriche 6 der Strichcode-Kennzeichnung 5. Insbesondere ist es auf diese Weise möglich, gleichzeitig, nämlich während einer einzigen Bewegung des auf dem Transportschlitten 14 vorgesehenen Bedruckungsobjekts 10, beide Strichcode-Kennzeichnungen 4, 5 zu erfassen. Ist eine der beiden Strichcode-Kennzeichnungen defekt,'z.B. verknickt oder verschmutzt, so ist dies unproblematisch, da dann auf die andere Strichcode-Kennzeichnung 5, 4 zurückgegriffen werden kann.

Das Verfahren zum Bedrucken eines Bedruckungsobjekts 10 ist nun wie folgt: Über einen mit dem Drucker 11 verbundenen Computer 17 werden dem Drucker neben den eigentlichen Druckdaten und notwendigen Steuerdaten Informationen zur Bezeichnung des zu bedruckenden Bedruckungsobjekts 10 sowie eine Materialnummer gesendet. Nachdem der Drucker 11 diese Daten empfangen hat, wird die Bezeichnung des Bedruckungsobjekts 10, z.B. in Form einer Artikelnummer, mittels eines Displays 18 angezeigt, und der Verwender wird aufgefordert, das entsprechende Bedruckungsobjekt 10 mit der richtigen Artikelnummer in den Drucker 11 einzulegen. Nach Quittieren des Einlegens des Bedruckungsobjekts 10 über eine Tastatur 19 durch den Verwender zieht der Drucker 11 das Bedruckungsobjekt 10 ein, indem der Transportschlitten 14 bewegt wird. Alternativ zu einem Display 18 und einer Tastatur 19 kann auch ein Touchscreen vorgesehen sein.

Beim Einziehen des Bedruckungsobjekts 10 erfolgt mittels der beiden Reflex-Sensoren 12, 13 eine Erfassung der jeweiligen Strichcode-Kennzeichnung 4 bzw. 5. Entspricht eine erfasste Strichcode-Kennzeichnung 4, 5 der vorgegebenen Artikelnummer, kann davon ausgegangen werden, dass das richtige Bedruckungsobjekt 10 eingelegt ist. Insofern wird dann automatisch der eigentliche Druckvorgang ausgeführt. Entsprechen die Strichcode-Kennzeichnungen 4, 5 nicht der erwarteten Artikelnummer, erscheint im Display 18 eine Fehlermeldung, und der Verwender wird dazu aufgefordert, das richtige Bedruckungsobjekt 10 einzulegen.

Weiterhin ist es möglich, dass überhaupt keine Strichcode-Kennzeichnung mittels der Reflex-Sensoren 12, 13 erfasst wird. Dies deutet darauf hin, dass gar kein Bedruckungsobjekt eingelegt ist, so dass dann auf dem Display 18 eine Meldung hinsichtlich eines fehlenden Bedruckungsobjekts angezeigt wird.

In den beiden zuletzt genannten Fällen, in denen entweder das falsche Bedruckungsobjekt 10 oder gar kein Bedruckungsobjekt eingelegt ist, wird jedenfalls kein Druckvorgang gestartet, um einen nicht optimalen Druck zu vermeiden bzw. um einen Druck ohne Bedruckungsobjekt zu vermeiden, was den Drucker 11 beschädigen könnte.

Durch diesen Prüfvorgang vor dem Start des Druckvorgangs kann gewährleistet werden, dass ein Drucken nur dann stattfindet, wenn das erwartete Bedruckungsobjekt 10 eingelegt ist, so dass die vom Computer 17 an den Drucker 11 übergebenen Steuerdaten hinsichtlich derartiger Parameter, wie Drucktemperatur und Druckdauer, tatsächlich korrekt sind. Auf diese Weise wird immer ein optimales Druckbild gewährleistet, und eine Beschädigung des Druckers 11 durch Falschanwendung wird vermieden.

Schließlich zeigt Fig. 3 abschnittsweise ein Bedruckungsobjekt gemäß einem anderen bevorzugten Ausführungsbeispiel der Erfindung. Hier sind die beiden Strichcode-Kennzeichnungen 4, 5 invertiert zueinander ausgeführt und, im Gegensatz zu der in Fig. 1 gezeigten Anordnung, weiter im Abstand zueinander angeordnet. Das heißt, dass die Strichcode-Kennzeichnung 4 relativ zur Strichcode-Kennzeichnung 5 eine Abfolge der hintereinander angeordneten invertierten Einzelstriche 6 aufweist. Außerdem sind die beiden Strichcode-Kennzeichnungen 4, 5 auch hier parallel zueinander ausgerichtet sind, und zwar auf gleicher Höhe innerhalb des Kennzeichnungsbereichs 2, was vorliegend bedeutet, dass zueinander invertierte und somit einander entsprechende Einzelstriche 6 einander genau gegenüberliegen.

### Bezugszeichenliste

- bedruckbarer Druckbereich: 1
- Kennzeichnungsbereich: 2
- Tabelle: 3
- Strichcode-Kennzeichnung: 4
- Strichcode-Kennzeichnung: 5
- Einzelstriche: 6
- Positionieröffnung: 7
- Positionieröffnung: 8
- Greiföffnung: 9
- Bedruckungsobjekt: 10
- Drucker: 11
- Reflex-Sensor: 12
- Reflex-Sensor: 13
- Transportschlitten: 14
- Positionierstift: 15
- Positionierstift: 16
- Computer: 17
- Display: 18
- Tastatur: 19

## Patentansprüche

1. Bedruckungsobjekt, zum Bedrucken mittels eines Druckers (11), vorzugsweise mittels eines Thermotransfer-Druckers, mit einem bedruckbaren Druckbereich (1) und einem Kennzeichnungsbereich (2), wobei in dem Kennzeichnungsbereich (2) zwei im Abstand voneinander angeordnete Strichcode-Kennzeichnungen (4, 5) mit einer Mehrzahl von hintereinander angeordneten Einzelstrichen (6) vorgesehen sind, **dadurch gekennzeichnet, dass** für den Zwischenraum z zwischen den beiden Strichcode-Kennzeichnungen (4, 5) gilt: 10 mm ≤ z ≤ 65 mm.

2. Bedruckungsobjekt nach Anspruch 1, **dadurch gekennzeichnet, dass** ein Lochmuster zur Positionierung und/oder Fixierung des Bedruckungsobjekts (10) in dem Drucker (11) vorgesehen ist.

3. Bedruckungsobjekt nach einem der vorhergehenden Ansprüche, **dadurch gekennzeichnet, dass** für die Längserstreckung 1 der Einzelstriche (6) in Längsrichtung der hintereinander angeordneten Einzelstrichen (6) gilt: : l ≤ 4 mm, vorzugsweise l ≤ 4 mm, ganz besonders bevorzugt 1 ≤ 2,5 mm und/oder l ≤ 4 mm, vorzugsweise l ≤ 4 mm, ganz besonders bevorzugt l ≤ 2,5 mm und/oder für die Breite b der Einzelstriche (6) in Querrichtung der hintereinander angeordneten Einzelstriche (6) gilt: 2 mm ≤ b ≤ 10 mm, vorzugsweise 2 mm ≤ b ≤ 8 mm, ganz besonders bevorzugt 2 mm ≤ b ≤ 6 mm.

4. Bedruckungsobjekt nach einem der Ansprüche 1 bis 3, **dadurch gekennzeichnet, dass** die beiden Strichcode-Kennzeichnungen identisch sind, wenigstens teilweise, vorzugsweise vollständig, zueinander invertiert sind oder um 180° verdreht zueinander angeordnet sind.

5. Bedruckungsobjekt nach einem der Ansprüche 1 bis 4, **dadurch gekennzeichnet, dass** das Bedruckungsobjekt (10) eine rechteckige Form aufweist, der Kennzeichnungsbereich (2) ausschließlich in einem Randbereich längs einer einzigen Seite des Bedruckungsobjekts (10) vorgesehen ist und beide Strichcode-Kennzeichnungen (4, 5) in diesem Kennzeichnungsbereich (2) vorgesehen sind.

6. Bedruckungsobjekt nach Anspruch 5, **dadurch gekennzeichnet, dass** die beiden Strichcode-Kennzeichnungen (4, 5) parallel zueinander verlaufen.

7. Bedruckungsobjekt nach Anspruch 6, **dadurch gekennzeichnet, dass** außerdem die einander entsprechenden Einzelstriche (6) der beiden Strichcode-Kennzeichnungen (4, 5) einander genau gegenüberliegen.

8. Bedruckungsobjekt nach einem der Ansprüche 1 bis 7, **dadurch gekennzeichnet, dass** die beiden Strichcode-Kennzeichnungen (4, 5) im Abstand voneinander angeordnet sind und vorzugsweise für den Zwischenraum z zwischen den beiden Strichcode-Kennzeichnungen (4, 5) gilt: 15 mm ≤ z ≤ 50 mm, vorzugsweise 20 mm ≤ z ≤ 30 mm.

9. Drucker, zum Bedrucken eines Bedruckungsobjekts (10) nach einem der vorhergehenden Ansprüche, **dadurch gekennzeichnet, dass** zur Erfassung einer Strichcode-Kennzeichnung ein einziger Reflexsensor (12, 13) vorgesehen ist.

## Claims

1. A printing object, for printing by means of a printer (11), preferably by means of a thermal transfer printer, comprising a printable printing region (1) and an identification region (2), wherein two identifying barcodes (4, 5) arranged at a distance from one another are provided in the identification region (2), said barcodes having a plurality of individual bars (6) arranged in succession, **characterised in that** the following is true for the gap z between the two identifying barcodes (4, 5):10 mm ≤ z ≤ 65 mm.

2. The printing object according to claim 1, **characterised in that** a hole pattern for positioning and/or fixing the printing object (10) in the printer (11) is provided.

3. The printing object according to either one of the preceding claims, **characterised in that** the following is true for the longitudinal extent 1 of the individual bars (6) in a longitudinal direction of the individual bars (6) arranged in succession: 1 ≤ 4 mm, preferably 1 ≤ 4 mm, very particularly preferably 1 ≤ 2.5 mm and/or 1 ≤ 4 mm, preferably 1 ≤ 4 mm, very particularly preferably 1 ≤ 2.5 mm, and/or the following is true for the width b of the individual bars (6) in the transverse direction of the individual bars (6) arranged in succession: 2 mm ≤ b ≤ 10 mm, preferably 2 mm ≤ b ≤ 8 mm, very particularly preferably 2 mm ≤ b ≤ 6 mm.

4. The printing object according to any one of claims 1 to 3, **characterised in that** the two identifying barcodes are identical, are inverted relative to one another at least in part, preferably completely, or are rotated through 180° relative to one another.

5. The printing object according to any one of claims 1 to 4, **characterised in that** the printing object (10) has a rectangular shape, the identification region (2) is provided exclusively in an edge region along a single side of the printing object (10), and both identifying barcodes (4, 5) are provided in this identification region (2).

6. The printing object according to claim 5, **characterised in that** the two identifying barcodes (4, 5) extend parallel to one another.

7. The printing object according to claim 6, **characterised in that** the individual bars (6) corresponding to one another of the two identifying barcodes (4, 5) are additionally arranged exactly opposite one another.

8. The printing object according to any one of claims 1 to 7, **characterised in that** the two identifying barcodes (4, 5) are arranged at a distance from one another and the following is preferably true for the gap z between the two identifying barcodes (4, 5): 15 mm ≤ z ≤ 50 mm, preferably 20 mm ≤ z ≤ 30 mm.

9. A printer for printing a printing object (10) according to any one of the preceding claims, **characterised in that** a single reflex sensor (12, 13) is provided to capture an identifying barcode.

## Revendications

1. Objet à imprimer, pour l'impression au moyen d'une imprimante (11), de préférence au moyen d'une imprimante à transfert thermique, avec une zone d'impression (1) pouvant être imprimée et une zone de marquage (2), où, dans la zone de marquage (2), deux marquages par des codes-barres (4, 5), disposés espacés l'un de l'autre avec une multiplicité de barres individuelles (6) disposées les unes derrière les autres, sont prévus, **caractérisé en ce que,** pour l'espace intermédiaire z entre les deux marquages par des codes-barres (4, 5), on a 10 mm ≤ z ≤ 65 mm.

2. Objet à imprimer selon la revendication 1, **caractérisé en ce qu'**un gabarit perforé est prévu pour le positionnement et/ou la fixation de l'objet à imprimer (10) dans l'imprimante (11).

3. Objet à imprimer selon l'une des revendications précédentes, **caractérisé en ce que**, pour l'extension longitudinale l des barres individuelles (6) dans la direction longitudinale des barres individuelles (6) disposées les unes derrière les autres, on a : l ≤ 4 mm, de préférence l ≤ 4 mm, de manière particulièrement préférée l ≤ 2,5 mm et/ou pour la largeur b des barres individuelles (6) des barres individuelles (6) disposées les unes derrière les autres dans la direction perpendiculaire, on a : 2 mm ≤ b ≤ 10 mm, de préférence 2 mm ≤ b ≤ 8 mm, de manière particulièrement préférée 2 mm ≤ b ≤ 6 mm.

4. Objet à imprimer selon l'une des revendications 1 à 3, **caractérisé en ce que** les deux marquages par des codes-barres sont identiques, peuvent être intervertis l'un par l'autre au moins partiellement, de préférence, totalement, ou sont disposés tournés l'un par rapport à l'autre à 180 °.

5. Objet à imprimer selon l'une des revendications 1 à 4, **caractérisé en ce que** l'objet à imprimer (10) présente une forme rectangulaire, la zone de marquage (2) est prévue exclusivement dans une partie de bordure le long d'une seule face de l'objet à imprimer (10) et les deux marquages par des codes-barres (4, 5) sont prévus dans cette zone de marquage (2).

6. Objet à imprimer selon la revendication 5, **caractérisé en ce que** les deux marquages par des codes-barres (4, 5) s'étendent parallèlement l'un par rapport à l'autre.

7. Objet à imprimer selon la revendication 6, **caractérisé en ce qu'**en outre les barres individuelles (6) se correspondant les unes aux autres des deux marquages par des codes-barres (4, 5) sont situées exactement les unes en face des autres.

8. Objet à imprimer selon l'une des revendications 1 à 7, **caractérisé en ce que** les deux marquages par des codes-barres (4, 5) sont disposés avec un espace entre eux et de préférence, pour l'espace intermédiaire z entre les deux marquages par des codes-barres (4, 5), on a : 15 mm ≤ z 50 mm, de préférence 20 mm ≤ z ≤ 30 mm.

9. Imprimante, pour l'impression d'un objet à imprimer (10) selon l'une des revendications précédentes, **caractérisé en ce que**, pour la saisie d'un marquage par des codes-barres un seul capteur réflex est prévu.
